Europäisches Patentamt

European Patent Office

Office européen des brevets

(19)

(11) **EP 1 515 240 A2**

(12) # EUROPEAN PATENT APPLICATION

(43) Date of publication:
**16.03.2005 Bulletin 2005/11**

(51) Int Cl.⁷: **G06F 17/28**

(21) Application number: **04019725.3**

(22) Date of filing: **19.08.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **15.09.2003 US 662602**

(71) Applicant: **MICROSOFT CORPORATION**
**Redmond, WA 98052 (US)**

(72) Inventors:
- **Huang, Chang-Ning**
  **Beijing China 100081 (CN)**

- Gao, Jianfeng
  **Haidian District Beijing China 100080 (CN)**
- Li, Mu
  **Chaoyang District Beijing China (CN)**
- Chang, Ashley X.
  **Issaquah WA 98029 (US)**

(74) Representative: **Grünecker, Kinkeldey,**
**Stockmair & Schwanhäusser Anwaltssozietät**
**Maximilianstrasse 58**
**80538 München (DE)**

(54) **Chinese word segmentation**

(57) The present invention relates to a corpus for use in training a language model. The corpus includes a plurality of characters and a plurality of morphological tags associated with a plurality of sequences of characters. The plurality of morphological tags indicate a morphological type of an associated sequence of characters and a combination of parts forming a morphological subtype.

FIG. 1

EP 1 515 240 A2

**Description**

BACKGROUND OF THE INVENTION

The present invention relates generally to the field of natural language processing. More specifically, the present invention relates to word segmentation.

Word segmentation refers to the process of identifying the individual words that make up an expression of language, such as text. Word segmentation is useful for checking spelling and grammar, synthesizing speech from text, and performing natural language parsing and understanding, all of which benefit from an identification of individual words.

Performing word segmentation of English text is rather straightforward, since spaces and punctuation marks generally delimit the individual words in the text. Consider the English sentence in Table 1 below.

> The motion was then tabled--that is, removed
> indefinitely from consideration.

Table 1

By identifying each contiguous sequence of spaces and/or punctuation marks as the end of the word preceding the sequence, the English sentence in Table 1 may be straightforwardly segmented as shown in Table 2 below.

> The motion was then tabled -- that is, removed
> indefinitely from consideration.

Table 2

In Chinese text, word boundaries are implicit rather than explicit. Consider the sentence in Table 3 below, meaning "The committee discussed this problem yesterday afternoon in Buenos Aires."

> 昨天下午委员会在布宜诺斯艾利斯讨论了这个问题。

Table 3

Despite the absence of punctuation and spaces from the sentence, a reader of Chinese would recognize the sentence in Table 3 as being comprised of the words separately underlined in Table 4 below.

> 昨 天 下 午 委 员 会 在 布 宜 诺 斯 艾 利 斯 讨 论 了 这 个
> 问 题。

Table 4

Many methods and systems have been devised to provide word segmentation for languages such as Chinese and Japanese. In some systems, models are trained based on a corpus of segmented text. The models describe the likelihood of various segments appearing in a text string and provide an output indicative thereof. Developing a corpus to train the models takes time and expense. In many instances, the quality of the output of an associated word segmentation system depends largely upon the quality of the corpus used to train the model. As a result, a method for evaluating corpora and developing corpora will aide in providing quality word segmentation.

## SUMMARY OF THE INVENTION

The present invention relates to a corpus for use in training a language model. The corpus includes a plurality of characters and a plurality of morphological tags associated with a plurality of sequences of characters. The plurality of morphological tags indicate a morphological type of an associated sequence of characters and a combination of parts forming a morphological subtype.

In another aspect, a computer readable medium having instructions for performing word segmentation is provided. The instructions include receiving an input of unsegmented text and accessing a language model to determine a segmentation of the text. A morphologically derived word is detected in the text and an output indicative of segmented text and an indication of a combination of parts that form the morphologically derived word is provided.

## BRIEF DESCRIPTION OF THE DRAWINGS

FIG. 1 is a block diagram of a general computing environment in which the present invention can be useful.
FIG. 2 is a block diagram of a language processing system.
FIG. 3 is a flow diagram of a method for developing an annotated corpus.
FIG. 4 is a flow diagram for creating a language model and evaluating the performance of the language model.
FIG. 5 is a block diagram of types and subtypes of morphologically derived words.

## DETAILED DESCRIPTION OF ILLUSTRATIVE EMBODIMENTS

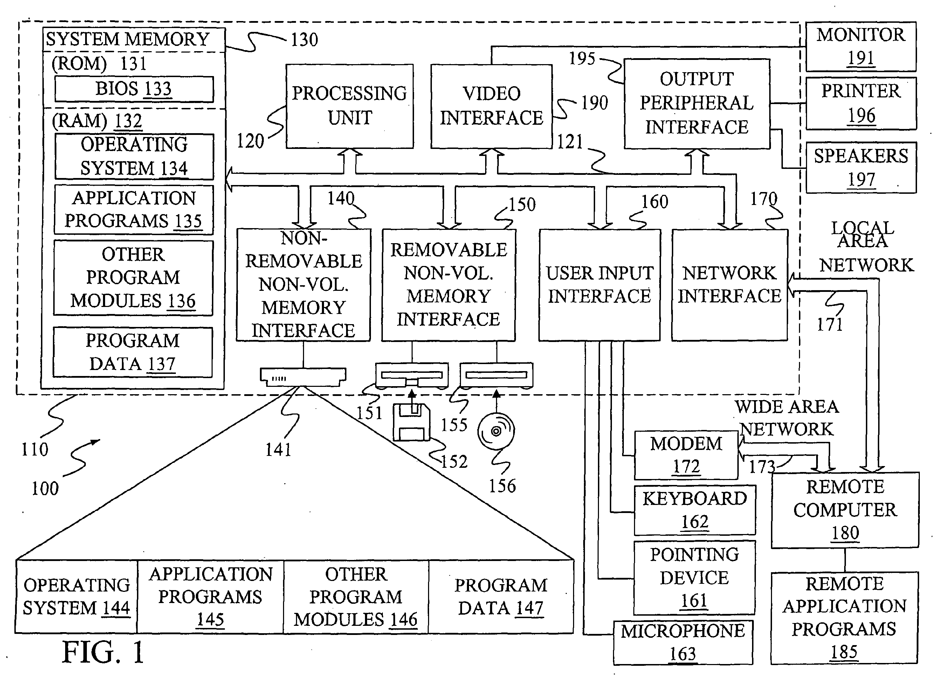

Prior to discussing the present invention in greater detail, an embodiment of an illustrative environment in which the present invention can be used will be discussed. FIG. 1 illustrates an example of a suitable computing system environment 100 on which the invention may be implemented. The computing system environment 100 is only one example of a suitable computing environment and is not intended to suggest any limitation as to the scope of use or functionality of the invention. Neither should the computing environment 100 be interpreted as having any dependency or requirement relating to any one or combination of components illustrated in the exemplary operating environment 100.

The invention is operational with numerous other general purpose or special purpose computing system environments or configurations. Examples of well known computing systems, environments, and/or configurations that may be suitable for use with the invention include, but are not limited to, personal computers, server computers, hand-held or laptop devices, multiprocessor systems, microprocessor-based systems, set top boxes, programmable consumer electronics, network PCs, minicomputers, mainframe computers, distributed computing environments that include any of the above systems or devices, and the like.

The invention may be described in the general context of computer-executable instructions, such as program modules, being executed by a computer. Generally, program modules include routines, programs, objects, components, data structures, etc. that perform particular tasks or implement particular abstract data types. Those skilled in the art can implement the description and/or figures herein as computer-executable instructions, which can be embodied on any form of computer readable media discussed below.

The invention may also be practiced in distributed computing environments where tasks are performed by remote processing devices that are linked through a communications network. In a distributed computing environment, program modules may be located in both local and remote computer storage media including memory storage devices.

With reference to FIG. 1, an exemplary system for implementing the invention includes a general purpose computing device in the form of a computer 110. Components of computer 110 may include, but are not limited to, a processing unit 120, a system memory 130, and a system bus 121 that couples various system components including the system memory to the processing unit 120. The system bus 121 may be any of several types of bus structures including a memory bus or memory controller, a peripheral bus, and a local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus also known as Mezzanine bus.

Computer 110 typically includes a variety of computer readable media. Computer readable media can be any available media that can be accessed by computer 110 and includes both volatile and nonvolatile media, removable and non-removable media. By way of example, and not limitation, computer readable media may comprise computer storage media and communication media. Computer storage media includes both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computer 110. Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer readable media.

The system memory 130 includes computer storage media in the form of volatile and/or nonvolatile memory such as read only memory (ROM) 131 and random access memory (RAM) 132. A basic input/output system 133 (BIOS), containing the basic routines that help to transfer information between elements within computer 110, such as during start-up, is typically stored in ROM 131. RAM 132 typically contains data and/or program modules that are immediately accessible to and/or presently being operated on by processing unit 120. By way of example, and not limitation, FIG. 1 illustrates operating system 134, application programs 135, other program modules 136, and program data 137.

The computer 110 may also include other removable/non-removable volatile/nonvolatile computer storage media. By way of example only, FIG. 1 illustrates a hard disk drive 141 that reads from or writes to non-removable, nonvolatile magnetic media, a magnetic disk drive 151 that reads from or writes to a removable, nonvolatile magnetic disk 152, and an optical disk drive 155 that reads from or writes to a removable, nonvolatile optical disk 156 such as a CD ROM or other optical media. Other removable/non-removable, volatile/nonvolatile computer storage media that can be used in the exemplary operating environment include, but are not limited to, magnetic tape cassettes, flash memory cards, digital versatile disks, digital video tape, solid state RAM, solid state ROM, and the like. The hard disk drive 141 is typically connected to the system bus 121 through a non-removable memory interface such as interface 140, and magnetic disk drive 151 and optical disk drive 155 are typically connected to the system bus 121 by a removable memory interface, such as interface 150.

The drives and their associated computer storage media discussed above and illustrated in FIG. 1, provide storage of computer readable instructions, data structures, program modules and other data for the computer 110. In FIG. 1, for example, hard disk drive 141 is illustrated as storing operating system 144, application programs 145, other program modules 146, and program data 147. Note that these components can either be the same as or different from operating system 134, application programs 135, other program modules 136, and program data 137. Operating system 144, application programs 145, other program modules 146, and program data 147 are given different numbers here to illustrate that, at a minimum, they are different copies.

A user may enter commands and information into the computer 110 through input devices such as a keyboard 162, a microphone 163, and a pointing device 161, such as a mouse, trackball or touch pad. Other input devices (not shown) may include a joystick, game pad, satellite dish, scanner, or the like. These and other input devices are often connected to the processing unit 120 through a user input interface 160 that is coupled to the system bus, but may be connected by other interface and bus structures, such as a parallel port, game port or a universal serial bus (USB). A monitor 191 or other type of display device is also connected to the system bus 121 via an interface, such as a video interface 190. In addition to the monitor, computers may also include other peripheral output devices such as speakers 197 and printer 196, which may be connected through an output peripheral interface 195.

The computer 110 may operate in a networked environment using logical connections to one or more remote computers, such as a remote computer 180. The remote computer 180 may be a personal computer, a hand-held device, a server, a router, a network PC, a peer device or other common network node, and typically includes many or all of the elements described above relative to the computer 110. The logical connections depicted in FIG. 1 include a local area network (LAN) 171 and a wide area network (WAN) 173, but may also include other networks. Such networking environments are commonplace in offices, enterprise-wide computer networks, intranets and the Internet.

When used in a LAN networking environment, the computer 110 is connected to the LAN 171 through a network interface or adapter 170. When used in a WAN networking environment, the computer 110 typically includes a modem 172 or other means for establishing communications over the WAN 173, such as the Internet. The modem 172, which may be internal or external, may be connected to the system bus 121 via the user-input interface 160, or other appropriate mechanism. In a networked environment, program modules depicted relative to the computer 110, or portions thereof, may be stored in the remote memory storage device. By way of example, and not limitation, FIG. 1 illustrates remote application programs 185 as residing on remote computer 180. It will be appreciated that the network connections shown are exemplary and other means of establishing a communications link between the computers may be used.

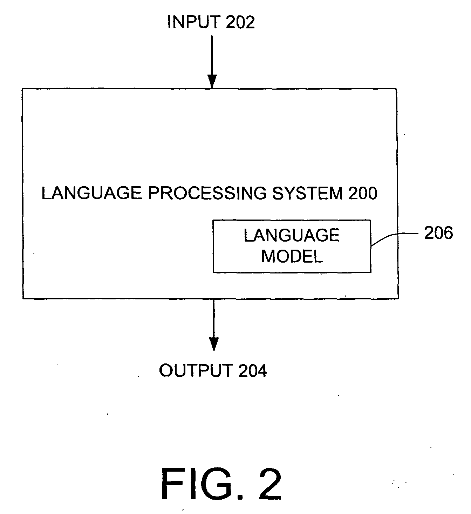

FIG. 2 generally illustrates a language processing system 200 that receives a language input 202 to provide a language output 204. For example, the language processing system 200 can be embodied as a word segmentation system or module that receives as language input 202 unsegmented text. The language processing system 200 processes the unsegmented text and provides an output 204 indicative of segmented text and accompanying information related to the segmented text.

During processing, the language processing system 200 can access a language model 206 in order to determine a segmentation for the input text 202. Language model 206 can be constructed from an annotated corpus that defines various types of words as well as an indication of the specific type. As appreciated by those skilled in the art, language processing system 200 can be useful in various situations such as spell checking, grammar checking, synthesizing speech from text, speech recognition, information retrieval and performing natural language parsing and understanding to name a few. Additionally, language model 206 may be developed based on the particular application for which language processing system 200 is used.

In addition to providing segmentation, system 200 also provides an indication of word type for each of the segmented words. In one embodiment, Chinese words are defined as one of the following four types: (1) entries in a given lexicon (lexicon words or LWs hereafter), (2) morphologically derived words (MDWs), (3) factoids such as Date, Time, Percentage, Money, etc., and (4) named entities (NEs) such as person names (PNs), location names (LNs), and organization names (ONs). Various subtypes can also be defined. Given the definitions of these types of words, system 200 can provide an output indicative of segmentation and word type. For example, consider the unsegmented sentence in Table 5 below, meaning "Friends happily go to Professor Li Junsheng's home for lunch at twelve thirty."

<div align="center">

朋友们十二点三十分高高兴兴到李俊生教授家吃饭

Table 5

</div>

An exemplary output of system 200 is shown in Table 6 below. Square brackets indicate word boundaries and a "+" indicates a morpheme boundary. Tags are provided within the brackets to indicate the various types and subtypes of words within the sentence.

<div align="center">

[朋友+们 MA_S] [十二点三十分 12:30 TIME] [高兴 MR_AABB]

[到] [李俊生 PN] [教授] [家] [吃饭]

Table 6

</div>

In order to provide segmentation, language model 206 detects word types in the input text 202. For lexicon words, word boundaries are detected if the word is contained in the lexicon. For morphologically derived words, morphological patterns are detected, e.g. 朋友+们 (which means friend+s) is derived by affixation of the plural affix 们 to the noun 朋友 (MA_S is a tag that indicates a suffixation pattern), and 高高兴兴 (which means happily) is a reduplication of 高兴 (happy) (MR_AABB is a tag that indicates an AABB reduplication pattern).

In the case of factoids, their types and normalized forms are detected, e.g. 12:30 is the normalized form of the time expression 十二点三十分 (TIME is a tag that indicates a time expression). For named entities, subtypes are detected, e.g. 李俊生 (Li Junsheng) is a person name (PN is a tag that indicates a person name).

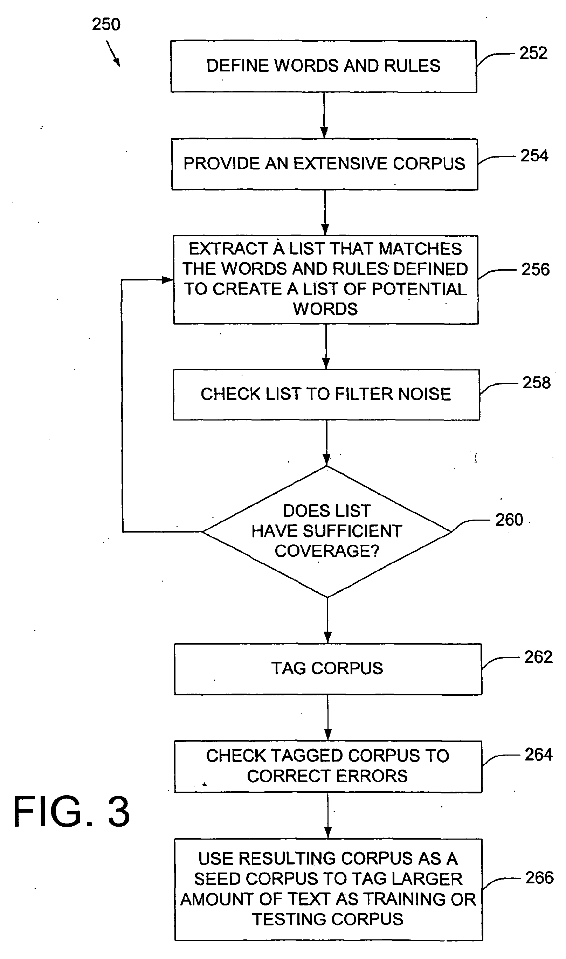

Language model 206 can be created from an annotated corpus. FIG. 3 illustrates a method 250 for developing an annotated corpus that is to be used for creating language models for word segmentation systems, such as language model 206 of system 200. At step 252, words and rules pertaining to word segmentation are defined. For example, a lexicon for Chinese word segmentation, a rule set for Chinese morphologically derived words, a guideline of Chinese factoids and named entities and/or combinations thereof may be defined for developing the annotated corpus. At step 254, an extensive corpus is provided that includes a large amount of text as well as a large variety of text. The extensive corpus may be chosen from various text sources such as newspapers and magazines. Next, at step 256, a list that matches the words and rules defined in step 252 is extracted from the extensive corpus to create a list of potential words.

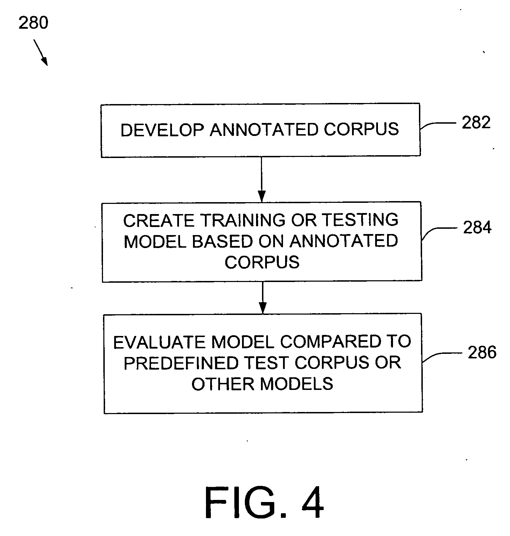

At step 258, the extracted list can be manually checked if desired to filter out any noise or errors within the list. It is then determined whether the list has sufficient coverage of the defined words and rules at step 260. In one embodiment, the list may be compared to a balanced, independent test corpus having a wide variety of domains and styles. For example, the domains and styles may include text related to culture, economy, literature, military, politics, science and technology, society, sports, computers and law to name a few. Alternatively an application specific corpus may be used having broad coverage of a particular application. If it is determined that the list has sufficient coverage, the corpus is then tagged at step 262. The tagging of the corpus can be performed as discussed below. At step 264, the tagged corpus can be checked and any errors may be corrected. At step 266, the resulting corpus is used as a seed corpus to tag a larger amount of text as a training or testing corpus. As a result, an annotated corpus is developed that can be evaluated using method 280 in FIG. 4.

FIG. 4 illustrates a method 280 for creating and evaluating a language model 206 in order to provide improved word segmentation. At step 282, an annotated corpus is developed, the process of which is described above with respect to FIG. 3. Given the annotated corpus, a training or testing model is created based on the annotated corpus at step 284. At step 286, the model created is evaluated by comparing the model to a predefined test corpus or other models. Given the evaluation performed in step 286, the effectiveness of language model 206 can be determined.

In order to evaluate a language model, the output of a word segmentation system using the model can be compared to a standard annotated testing corpus that serves as a standard output of a segmentation system. To achieve a reliable evaluation, a raw (unannotated) test corpus may be chosen that is independent, balanced and of appropriate size. An independent test corpus will have a relatively small overlap with the annotated corpus used to train the language model. A balanced corpus contains documents having wide variety of domain, style and time. In order to be large enough, one embodiment of a test corpus includes approximately one million Chinese characters. After developing the test corpus, the corpus is manually annotated to be used as a standard output of a Chinese word segmentation system given the test corpus. The test corpus can be annotated using the tagging specification described below or another tagging specification.

Given the annotated test corpus, a quantitative evaluation can be used to evaluate the performance of a language model. If the total number of word tokens in the standard test set is "S", the total number of word tokens of the output of a word segmentation system to be evaluated applied to the test set is "E" and a number of word tokens in the output which exactly matched the word tokens in the standard test set is "M", quantitative values can be calculated to evaluate performance of the language model. Equations 1-3 below show values for precision, recall and an F-score.

$$\text{Precision} = M/E \tag{1}$$

$$\text{Recall} = M/S \tag{2}$$

$$F = 2 \times \text{Precision} \times \text{Recall}/(\text{Precision} +$$

$$\text{Recall}) \tag{3}$$

Furthermore, the evaluation may be performed on various subtypes according to equations 1-3 above. For example, a person name performance evaluation may be conducted where $S_{PN}$ is the total number of person name tokens in the standard test corpus. $E_{PN}$ is the total number of person name tokens in the output of a word segmentation system to be evaluated and $M_{PN}$ is a the number of person name tokens in the output which exactly matched the person names in the standard test set. As a result, the performance equations are:

$$\text{Precision}_{PN} = M_{PN}/E_{PN} \tag{4}$$

$$\text{Recall}_{PN} = M_{PN}/S_{PN} \tag{5}$$

$$F_{PN} = 2 \times \text{Precision}_{PN} \times \text{Recall}_{PN}/(\text{Precision}_{PN} +$$

$$\text{Recall}_{PN}) \tag{6}$$

It is further useful to compare other system results in evaluating performance of language models. For example, it may be useful to only compare various portions of outputs of different word segmentation systems such as (1) person names, (2) location names, (3) organization names, (4) overlapping ambiguous strings and (5) covering ambiguous strings. By only evaluating a subset of the output of the segmentation systems, a better idea of where errors are occurring in segmentation can result.

In order to develop annotated corpora, a tagging specification is used to consistently tag the corpora given the definitions of Chinese word types described above. Lexicon words with the lexicon are delimited by brackets without additional tagging. Other types are tagged as provided below.

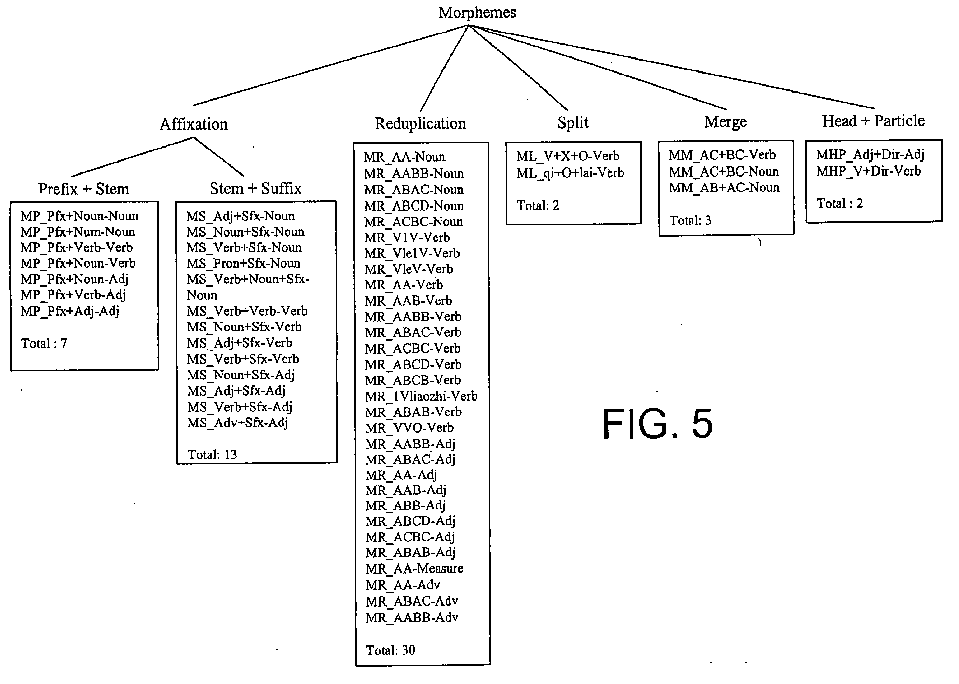

FIG. 5 illustrates a diagram of morphological categories for tagging corpora. The morphological categories include affixation, reduplication, split, merge and head particle. Each morphological category or type includes various subtypes that can be tagged during the tagging process. The format in FIG. 5 shows the category, the parts that make the word and the resultant part of speech of the word. In the diagram of FIG. 5, "MP" stands for morphological prefix and "MS" stands for morphological suffix. "MR" is a reduplication, "ML" a split, "MM" denotes a merge and "MHP" is a morphological head particle. The part between the underscore (_) and the (-) is the combination of parts that form the morphologically derived word. For reduplication and merge, the characters A, B and C represent Chinese characters.

The format in FIG. 5 represents morphological variations and it will be appreciated that other formats of tagging may be used to represent the variations. Affixation includes subcategories prefix and suffix where a character is added to a string of other characters to morphologically change the word represented by the original character. Prefixes includes seven subtypes and suffixes include thirteen subtypes. Reduplication occurs where the original word that consists of a pattern of characters is converted into another word consisting of a combination of characters and includes thirty different subtypes. Reduplication also includes a "V", which represents a verb, "O" is an object and "1", "le" and "liaozhi" are particles.

Split includes a set of expressions that are separate words at the syntactic level but single words at the semantic level. For example, a character string ABC may represent the phrase "already ate", where the bi-character word AC represents the word "ate" and is split by the particle character B representing the word "already". Split includes two subtypes. One subtype involves inserting a character or characters between a verb and an object and the other inserts an object between the phrase "qilai". Merging occurs where one word consisting of two characters and another word consisting of two characters are combined to form a single word and includes three subtypes. A head particle occurs when combining a verb character with other characters to form a word and includes two subtypes that combine an adjective and a direction and a verb and a direction.

The tagging format for named entities and factoids is presented in Table 7 below. Format-1 includes simple tags for various types and subtypes to help facilitate quick and easy tagging by a human. For example, the name entities for person, location and organization are simply tagged as P, L and O, respectively. Format-2 represents tagging using the Standardized General Mark-up Language (SGML) according to the Second Multilingual Entity Task Evaluation (MET-2). If desired, a transformation between format-1 and format-2 can be realized through a suitable transformation program.

| Main Category | Subcategory | Format-1 tagging set | Format-2 tagging set |
|---|---|---|---|
| PERSON | PERSON | P | PERSON |
| LOCATION | LOCATION | L | LOCATION |
| ORGANIZATION | ORGANIZARION | O | ORGANIZATION |
| TIMEX | Date | dat | DATE |
| | Duration | dur | DURATION |
| | Time | tim | TIME |
| NUMEX | Percent | per | PERCENT |
| | Money | mon | MONEY |
| | Frequency | fre | FREQUENCY |
| | Integer | int | INTEGER |
| | Fraction | fra | FRACTION |
| | Decimal | dec | DECIMAL |
| | Ordinal | ord | ORDINAL |
| | Rate | rat | RATE |
| MEASUREX | Age | age | AGE |
| | Weight | wei | WEIGHT |
| | Length | len | LENGTH |
| | Temperature | tem | TEMPERATURE |
| | Angle | ang | ANGLE |

| Main Category | Subcategory | Format-1 tagging set | Format-2 tagging set |
|---|---|---|---|
| | Area | are | AREA |
| | Capacity | cap | CAPACITY |
| | Speed | spe | SPEED |
| | Other measures | mea | MEASURE |
| ADDRESSX | Email | ema | EMAIL |
| | Phone | pho | PHONE |
| | Fax | fax | FAX |
| | Telex | tel | TELEX |
| | WWW | www | WWW |

Table 7

Given the tagging format in Table 7, named entities and factoids within corpora can be easily tagged to provide annotated corpora. An example of tagging in format-1 and format-2 is provided below.

Tag in format-1:

e.g.: on the morning of October 9th --→ on the [tim morning] of [dat October 9th ]

The tagging format of format-2:

e.g.: on the morning of October 9th --→ on the <TIMEX TYPE=TIME>morning </TIMEX> of <TIMEX TYPE=DATE> October 9th </TIMEX>

It is useful to provide general guidelines when tagging corpora to insure consistency and accuracy. The following description provides these guidelines.

General Guidelines

(1) Placing an "Enter" in original (raw) text to make a new line should be avoided.
(2) A tagging that is marked as "-ms" is described below. An example is [P-ms 邓小平] 理论 "Deng Xiaoping theory".
(3) A string is allowed to have multi-tagging. If the annotators do not have enough information to decide the mono-tagging for such strings, then "/" is introduced for a muti-tagging.
   [L/O 西昌卫星发射中心 ]
(4) OPT: In the case that the annotators are not sure whether some strings are to be tagged or not, then the mark OPT is introduced to mean that this tagging is open to discuss.
   [P/OPT 上帝]

Guidelines that pertain to all Named Entities (Person, Location, Organization)

1. Proper Nouns are those NEs with objective and specific meanings, while the NEs with abstractive and general meanings are not included.
   Eg: The expressions, '老外 Foreigner', '姑娘 girl' are not Proper Nouns.

2. For a complex Proper Noun, embedded tagging is not allowed. That is to say the maximum matching approach is used where the segmented word having the greatest number of characters is used.

3. TIMES, NUMEX, MEASUREX and ADDRESS that are embedded in Person Name, Location Name and Organization Name are not to be tagged.

```
[O 北京四中]      --- right tag

[O北京[int 四]中]  --- Wrong tag
```

4. In the case that an Entity expression contains some strings in both English and Chinese while the English strings are integrally associated with the Entity, then the whole expression is tagged as an Entity.

```
[O IBM中国公司]

[O. American航空公司]
```

5. In a possessive construction, the possessor and possessed NE substrings should be tagged separately. In Chinese spelling way, the designator "的" is a sign for such possessive construction.

```
[L 美国] 的 [L纽约]

[L 美国] 的 [P理查德本森]
```

Note that: the string "的" should be considered as part of the Entity if it does not function as the designator.

[O 美的电器集团]

6. Quotation Marks are included in the tag if they appear within an Entity's name but not if they bound the Entity's name. In Chinese text, Title Marks are treated in the same way.

[O "阿克布拉克"合资企业]

《 [O 星岛日报] 》的社论说

7. Non-decomposable complex phrase. If a complex expression is not an entity as a whole while it contains an entity within the expression, then the entity within the expression is to be tagged as 'P-ms', 'L-ms', or 'O-ms'.
    If the annotators are not sure whether the expression is decomposable or not, then the expression is treated as decomposable, and the Entity within it is to be tagged. E.g. [L_ms香港]脚 "Hong Kong Foot", with the same meaning as athlete's foot. The expression as a whole is non-decomposable. According to the guideline, the word 'Hong Kong' can be tagged as a Location name, 'L_ms'. E.g. [ord 第四十六] 届 [O太平洋亚洲旅行协会] 年会 "Forty-sixth Pacific Asia travel Association annual meeting", in the guideline the expression is treated as decomposable:

'太平洋洲旅行协会 Pacific Asia travel Association' is tagged as organization, while '太平洋亚洲旅行协会年会 Pacific Asia travel Association annual meeting' is not an organization.

    For an expression 'Person Name + thought (or: theory, law, ideology)', the whole expression is to be tagged as 'p-ms'

[P_ms 马克思] 主义       "Marx ideology"
[P_ms 毛泽东] 思想       "Mao Zedong thought"
[P_ms 阿佛加罗] 定律      "Avogadro's law"

8. Treatment of '军' (... army/ ... military...). The main distinction is between interpreting 军 as an adjective, similar to the English 'military' (i.e. 'not civilian') and interpreting 军 as an 'organization designator'. In order to get the latter interpretation, look for case in which 军 is preceded by a service 'branch' designator (such as 空 'air' as in 'Air Force')

[L美]军飞机        "U.S. military aircraft"

[O斯里兰卡空军]      "SRI Lanka air force"

    In general, do not tag terms ending in部队 "force" as ORGANIZATION. [L西非]维和部队 "West Africa peace-keeping force", 军事基地 "military base" is to be tagged as LOCATION, NOT ORGANIZATION. [L彼得森空军基地] "Peterson air military base"

9. For a Name Entity (Person name, Location name, Organization name), if it is a kind of multimedia (TV & Radio shows, movies and books), product or treaty, it is to be tagged with the "-ms" tag.
    [P-ms 邓小平]一片的播出  " Deng Xiaoping (CL-for-film)'s release, i.e .the release of the film " Deng Xiaoping"
    Since '邓小平 Ding Xiao Ping' is the title of a TV program. According to the guideline, 'Ding Xiao Ping' is to be tagged as 'P-ms'.

[L_ms 广州]条约  《 [L_ms 淮海]战役》这本书的出版

10. Aliases, Nicknames, Acronyms of Entity are to be tagged.

[O ETS ]

" [O深蓝]"

[O IBM]

[L沪]

[O 北约]

If a Name Entity is embedded in Acronym of Entity, then it is not to be tagged. [O中共中央政治局], '中' means '中国', no mark up for 中.

**Guideline that pertain only to PERSON**

1. Titles of Person
   Titles and role names are not considered part of a person's name.

[P奥尔布赖特]国务卿  "Albright state minister"

[L英国]女王[P伊丽莎白] "Queen Elizabeth of England"

However, generational designators "世", "代" are considered part of a person's name.

[P 十四世达赖丹增加措] "fourteenth dalai tenzin gyatso"

[L英国]女王[P 伊丽莎白二世] "England's queen Elizabeth II"

When a person's title falls between the surname and the given name, include the title.

[P李主席登辉]先生  "Li Chairman Deng-hui Mister"

2. Family names are to be tagged as Person

[P蒋]氏父子 "the Jiang family, father and son"
[P西迪]兄弟 "the Xidi brothers"

3. Names of animals are to be tagged as Person.

4. Saints and other religious figures, the proper names are to be tagged as Person.

[P 释迦穆尼]
[P 达赖]喇嘛

5. Fictional characters are to be tagged as Person.

6. Fictional animals and non-human characters are to be tagged as Person.

7. When a person's title or dynasty title refers to a specific person, then it is tagged as Person.

```
[P 康熙]      "Kang Xi, i.e. Emperor Kang Xi"
[P 秦始皇]    "Qin dynasty first emperor"
[P 老子]      "Laozi"
```

8. Miscellaneous Personal Non-taggables

If people names appear as the titles of multimedia (TV and radio show, movies and books), of products and of treaties, the names are to be tagged as 'p_ms'.

《《[P_ms蒙娜丽莎]》》 "Mona Lisa",as the title of a painting (or title of a book), is to be tagged "P_ms".

In the following five cases, the proper names are not to be tagged as Person: laws named after people, courts cases named after people, weather formations named, diseases/prizes named after people.

```
里氏六点二级 --- no tag on '里'
专家呼吁人们要注意沙氏杆菌 ---- no tag on '沙'
[P_ms 诺贝尔]奖 -----tag '诺贝尔Nobel' as 'P_ms'
```

9. Normal pattern of Chinese names

Generally, person Name is constitute of two parts: Family Name (FN) & Given Name (GN)

| # | Name Pattern | How to tag | Example |
|---|---|---|---|
| 1 | Family Name only (FN) | Tag FN | [P 李] |
| 2 | Given Name only (GN) | Tag GN | [P志东] |
| 3 | FN+ GN | Tag the whole name | [P王志东] |
| 4 | a. Name (whole name, or GN only, or FN only)+Title<br>b. Title + Name | Tag name(s) only, i.e. no mark on title | [P李]教授<br>[P王志东]教授<br>[P志东]教授<br>[马]厂长<br>Title includes: president, premier, minister, principal, professor, teacher, PhD., researcher, senior engineer, chairman, CEO, |

| # | Name Pattern | How to tag | Example |
|---|---|---|---|
| | | | etc. |
| 5 | Prefix+Name Name+Suffix | Tag Name only | 大[P李]<br>[P李]总 |
| 6 | Name+Name | Tag the names separately | [P李向东] [P李向阳] |
| 7 | Foreign name | Tag the whole name | [P马拉多纳]<br>[P比尔.盖茨]--If the character '.' appears among a Person Name, the name is considered as a whole Entity |

**Guideline that pertain only to LOCATION**

The strings that are tagged as LOCATION include: oceans, continents, countries, provinces, counties, cities, regions, streets, villages, towns, airports, military bases, roads, railways, bridges, rivers, seas, channels, sounds, bays, straights, sand beach, lakes, parks, mountains, plains, meadows, mines, exhibition centers, etc., fictional or mythical locations, and certain structure, such as the Eiffel Tower and Lincoln Monument.

[L北京市] [L海淀区] [L知春路49号]　　"Beijing　　City, Haidian district, Zhichun road No.49"

[L朝鲜] 南北对话 "Korea south and north dialogue", tag on Korea but no tag on south/north" 阿 [L以]冲突 "conflict between Arab and Israel", tag on Israel but no tag on Arab since it does not refer to a specific country

前[L 南]地区　"former Yugoslavia area"

震中位于[L 北纬三十六点二零度，东经九十点二九度]

"epicenter located at north 36.0 degrees east 95.9 degrees".

1. For Location entity embedded in another Location Entity, then the whole entity is to be tagged.
   [L 美国空军基地] " America military base", no tag on America Treatment of ...地区 "...district/...area" . If 地区 means a specific district, then it is to be tagged as part of the Location; if '地区' generally means some area, then it is not to be tagged; if the point of地区 is unclear, then it is not tagged. [L临沂地区]现更名为 [L临沂市] "Lin Yi district now changes it name into Lin Yi city" For Organization names embedded in location names, the organization name are not be tagged. [L白宫玫瑰园] "White House rose garden", no tag on White House.

2. Locative designators are to be tagged as part of Location.

[L马里兰州]    "Maryland state"

[L 约旦河]    "Jordan River"

Compound expressions in which place names are listed in succession are to be tagged as separate instances of Location. [L吉林省] [L 延边朝鲜族自治州 ] [L图们市] "Jilin province Yanbian Korean autonomous region Tumen municipality".

3. Transnational locative Entity Expressions

[L 西非]国家领导人 "west Africa country leader" [L 亚太] "Asia & Pacific Rim", tagged as one entity [L 西半球] 国家 "western hemisphere countries" 发展中国家 No mark up.

Subnational region names:

[L 华南]        "South China"

[L 西北五省区]    "Northwest five provinces"

使西南地区的客运 "causing the southwest region's passenger service...", no markup on "southwest" since it has no fixed reference [L华南 ]地区 "South China region", here South China has fixed reference.

4. Time modifiers of locative Entity Expressions. Historic-time modifies ("former") are not to be included in tagged expressions.

前 [L 南]地区        "the former Yugoslavia region"

5. Space modifiers of Locative Entity Expressions

[L 北爱尔兰]    "North Ireland"

[L中西伯利亚]    "central Siberia"

[L中] [L 南美] "central and south America", this expressions contain two Location entities "central America" and "south America", so they are to be tagged separately.'

6. Miscellaneous locative non-taggables:

Do not tag the names of locations which are in language names of the form x-语 or x-文, where x is a location.

英语 "England language, i.e. English", no tag on '英' 中文 "China language", no tag on '中'

Do tag the location names of the form x-话, where x is a location. 用 [L四川 ] 话 "using Sichuan words", tag on Location on 四川.

7. Do not tag location names which are part of the names, ending in 族 or 裔, of ethnic groups.

目的是促进 [L塞浦路斯] 西族与土族的瓦解

"the intent was to promote peace and understanding between Cyprus Greece-ethnic-group and turkey-ethnic-group".

In the expressions '华裔', '汉族', '华' and '汉' are not to be tagged as Location. However, in the expressions 华人'、'华侨 '、'华商'、'中医'、'中草药'、'中餐馆',, '华' and '中' are to be tagged as Location.

8. Normal pattern of Location

| # | Location pattern | How to tag | Example |
|---|---|---|---|
| 1 | Location Name only (LN) | Tag LN | [L山东] |
| 2 | LN+ Location Designator | Tag the whole expression | [L北京市]<br>[L天安门广场] |

| # | Location pattern | How to tag | Example |
|---|---|---|---|
| 3 | Compound expressions in which place names are listed in succession | Tag separately | [L山东省] [L青岛市] [L胜利广场] ；<br>[L北京]、 [L天津] 、 [L上海] |
| 4 | Alias or nicknames are listed in succession | Tag separately | [L鲁]、 [L冀]、 [L京]；<br>[L港] [L澳] [L台] 地区 ；<br>[L中] [L俄] 两国领导人进行了会晤 |
| 5. | LN expression contains person name or place name | NO tag for the person name or the place name | [L李嘉诚广场]<br>[L 南京路] |
| 6 | LN+L designator, as a whole to express a complete concept | Tag the expression using maximum matching approach | [L南非共和国]<br>[L香港特别行政区] |

<u>Guideline that pertain only to ORGANIZATION</u>

Proper names that are to be tagged as Organization include stock exchanges, multinational organizations, businesses, TV or radio stations, political parties, religious groups, orchestras, bands, or musical groups, unions, non-generic governmental entity names such as " congress", or "chamber of deputies," sports teams and armies ( unless designated only by country names, which are tagged as Location), as well as fictional organizations.
Corporate or organization designators are considered part of an organization name. A basic principle for Location tagging is to use maximum matching approach.

前 [O中国新华社香港分社] 社长 [P 许家屯]

"former China Xinhua News Hang Kong branch director Xu Jiatun"

[O北京大学计算机系人工智能实验室] "Peking University Computing Science Department Artificial intelligence Lab"

Normal Pattern for Organization

| # | Type | Tag | Example |
|---|------|-----|---------|
| 1 | organization name+ designator | Tag as a whole | [O海尔集团] |
| 2 | place name+organization name | Tag as a whole | [O北京市电信局] |
| 3 | Person name + Organization name | Tag as a whole | [O李嘉诚基金会] |
| 4 | Alias or abbreviation | Tag as a whole | [O北约] |

1. National (or international) legislative bodies and departments or ministries are to be tagged as Organization.

当选 [O 国会] 议员

[O 内阁] 改组将会在 [dat八月] 底前完成

在 [O 总统府] 分别约见了多位 [O 国民党] 中常委检察官

[P 刹瓦什] 向 [O 宪政法庭] 提出动议

2. Treatment of Location name immediately preceding an organization name. Generally there are two types of relations between the Location and the Organization: one is procession (such as, 法国航空航天局 "France aviation and space flight bureau"), the other is the geography link (such as 北京大学 "Beijing University").'

2.1 For an Organization Entity beginning with a location name, if removing Location is to lead to a location without specific referring, then the Location name is to be tagged as part of Organization.

[O北京大学]      "Beijing University"

[O深圳中学]      "Shenzhen middle school"

2.2 For the Organization expression mentioned above, if there is one location name (or more than one names) immediately preceding it, then the location name and the Organization expression are to be tagged separately.

[L 中国] [O北京大学]  "China Beijing University"

[L 中国] [L广东] [O深圳中学]  "China Guangdong Province Shenzhen middle school"

2.3 For an Organization Entity beginning with non-location string (such as 同济大学 "Tongji University"), if there is one Location (or more than one locations) preceding it, then only the Location immediately preceding it is to be tagged as part of Organization.

[O上海同济大学]　"Shanghai Tongji University"

[L　中国] [O上海同济大学]　"China Shanghai Tongji University"

[O湖北省武钢三中]　"Hubei province WuGang No. 3 middle school"

2.4 If an Organization Entity begins with two or more paratactic locations, then all those locations are to be tagged as part of Organization; if there is other location(s) receding the whole Organization, then the location and organization are to be tagged separately.

[L　洛杉矶] [O亚太法律中心]　"Los Angeles Asia Pacific laws center"

[L　香港] [O中港贸易协会]　"Hong Kong, China, Hong Kong Commercial Association"

E.g.: 洛杉矶台北经济文化办事处　"Los Angeles Taipei Economics & Culture Office", whether tag as A: [L 洛杉矶] [O洛杉矶台北经济文化办事处] or B : [O台北经济文化办事处]
In this case, tagging A is chosen by default.

2.6 In the case that annotators do not have enough knowledge to decide whether organization begins with a location.
E.g.: in the expression "印度尼西亚莫巴蒂 努山打腊航空公司", annotators are not sure whether莫巴蒂 努山打腊 is a location name. However, it is clear that once this string is removed, the left strings have no specific referring. Therefore, according to 2.1, the expression is to be tagged as: [L印度尼西亚] [O 莫巴蒂 努山打腊航空公司 ].

2.7 If a location entity immediately follows by an Organization, while there is no modifying relation existing between them, then they are to be tagged separately.

促进了[L　中国] [O　东盟]的合作　"have promoted the cooperation between China and Southeast Asia"

在 [L　日内瓦] [O　联合国]人权会议上　"on Geneva UN human rights conference"

3. Phrases ending with " ...会" (meeting, conference, arts festival, athletic competitions) refer to events, and are not to be tagged as Organization. However, the institutional structures themselves -- steering committees, etc. -should be tagged as ORGANIZATION.

奥运会　　"Olympic sports meeting"

[O 奥运会组委会] "Olympic Committee"

If the phrases "..会." refer to "Congress" or "Chamber of deputies", then they are to be tagged as Organization. Notice that session meetings of Congress ( or Chamber of deputies) are not be tagged as Organization, because they are events.

[O 全国政协] 八届五次会议将于

听取和审议 [O 全国政协八届五次会议常务委员会] 报告

[O 九届人大] 一次会议

4. If the first person pronouns "我", "我们" functioned as modifiers preceding an Organization entity, the pronouns are not to be tagged as part of Organization. 我国[O○共产党] "I country Communist Party"我们[O清华大学] "we Tsinghua University".

5. Embassies and Consulates

Names of embassies, consulates and other diplomatic missions should be marked as Organization only if both the country they represent and their location can be included in the markup.

后来调任 [O美国驻洪都拉斯大使馆] "then transferred to U.S. stationed at Honduras embassy".

If Embassy descriptor is contiguous with the country/district it represents, then the country/district is to be tagged as part of Organization.

前往[L香港] 的 [O洪都拉斯领事馆] "go to Honduras Embassy in Hong Kong" If Embassy descriptor is contiguous with the geography location, then mark any locations separately as Location, and do not tag the embassy as an Organization.

[L美国]在通过驻 [L金沙萨] 大使馆和其他正常渠道 ] "U.S. going through stationed at Kinshasa embassy and other normal channels".

6. Manufacture and product

In cases where the manufacture and the product are named, the manufacture is to be tagged as Organization, while the product is not to be tagged. Products must be defined loosely to include manufactured products (e.g. vehicles), as well as computed products (e.g., stock indexes) and media products (e.g., television shows).

[O 道琼]工业平均指数 "Dow Jones industrial average index".

7. Do tag news sources (newspapers, radio and TV stations, and news journals) as Organization. Both publishers and publications are to be tagged as Organization. Note that TV stations differ from TV shows, the latter not being taggable.

[O人民日报]海外版第三版 "Peoples' daily overseas edition pay three".

这是[O中央台] 报道的] "this is central station reporting".

8. Organization-like non taggable

Generic entity names such as "the government", are not to be tagged.

[ L中国]政府　　"China government"

[L 新疆自治区] 政府 "Xinjiang Autonomy district government" [O中国公安部]门 "China public safety department(s)".

Do not mark the term 中央 "center" by itself as an Organization. However, do mark 党中央 "party center" as an Organization.

在中央的领导下　"under the leadership of the center".

以[P江泽民]同志为核心的[O 党中央]周围 "party center, with comrade Jiang Zeming as its nucleus". Do not tag 交易会"exchange fair" as Organization.

[L 中国][L 天津]出口商品交易会 "China Tianjin exported commodity exchange fair".

9. Tag on several special named entities.

[L 人民大会堂]　　"the Great Wall"

[O 白宫]　　　　"White House"

[O 克里姆林宫]表示　"Kremlin says"

How to tag TIMEX

The TIME type is defined as a temporal unit shorter than a full day, such as "second, minute, or hour". The DATE sub-type is a temporal unit of a full day or longer, such as "day, week, month, quarter, year(s), century, etc." The DURATION sub-type captures durations of time.

1. DATE

For the form string 前/头/下+ duration, then entire phrase is tagged as dat_MET, because the duration is embedded in DAT so not to be tagged.

[dat_MET 前3天] "the first three days"

[dat 秋季]报告 " autumn report"

[dat第四季度] " the fourth quarter"

[dat 十五世纪] "the fifteenth century"

[dat春节] "the spring Festival"

Notes that the string "(上/中/下)旬 the first/second/last ten days of one month" are to be tagged [dat 五月上旬] "the last ten days of May" Words or phrases modifying the experssions, such as 'around' or 'about' are not be tagged.

大约 [dat 五月四日]　　 "around May 4th"

2. Time

[tim 凌辰三四点钟] "three to four o'clock in the morning"

[tim 北京时间 5时59分] "Beijing time 5 hour fifty nine minutes"

[tim_MET 上午]、[tim_MET 中午]、[tim_MET 下午]、[tim_M ET 晚上] "morning, noon, afternoon, evening"

Treatment of "大约 about/around"

[tim 晚上大约七点] 到达　 "in the evening about 7 hours arrive"

In this phrase, the string 'about' is bounded by two Times and it is non-decomposable, so it is to be tagged.
[dat 九月十三日] 大约 [tim 七点] 到达北京 "September 13th about seven o'clock arrive in Beijing.
In this phrase, the string 大约 is bound by a date and a time, so it is decomposable.
3. DURATION

[dur 10天]　　 "10 days"

在水门丑闻 [dur 四分之一世纪] 时发表的评论 "in the quarter century of discussions since the Watergate scandal..."
The string "整整" is not to be included in Duration tag, because to include it or not makes little difference.

整整 [dur 十五年]　　 "exactly fifteen years"

[dur 九点] 整到达北京站 "exactly at 9 o'clock arrive at Beijing station"

十年九旱 "nine years drought in ten years, i.e. often suffering drought", no mark up on 'nine' and 'ten', because they are both virtual numbers in case.
4. Non-taggable:
The time expressions that do not have absolute time scale, such as "just now, recently, since negotiation, a moment", are not to be tagged.
In the case that a festival expression does not have a absolute time, then it is not be tagged.
[L 印度] 国际电影节 "India international film festival"
[L 中国] 旅游年 "Year of China Tourism, referring 1997"
[L 美国] 的独立日 "U.S. Independence Day", no markup for Independence Day because of its close connection with an event.

Do not tag the 春"spring" in 春联 "Spring couplets".'

5. Special Case:

If two time expressions are in different subtypes, then they are to be tagged separately. If the two expression are non-decomposable, then they are to be tagged together.

[dat 2月12日][tim 上午8点] "Feb.12 am 8 o'clock"

[dat星期一][tim 8点] "Monday 8 o'clock"

If a location entity is embedded in time expression, the mark '_MET' is introduced to refer to the MET-2 guideline. "ER99" can be used to tag according to an alternative specification.

[tim北京时间1997年2月9号19点28分]

The expressions such as "last year", "yesterday", "this morning" are to be tagged according to MET-2, call for annotators attention on the difference and use the extra mark accordingly.

[dat_MET 去年[dat_ER99 上半年]]

[dat_MET 今年[dat_ER99 夏天]]

[dat_MET 今年[dat_ER99 三月一日]]

[dat_MET 今年[dat_ER99 4月17日]] [tim_MET 下午]

[dat_MET 去年[dat_ER99春夏之交]]

[tim_MET 昨天[tim_ER99 夜里]]

[dat_MET 今天][tim_MET 晚上]

[tim_MET 今早[tim_ER99 六点]]

[tim 早上六点]

[dat_MET 当日][tim_MET 下午]

[dat_MET 当日][tim 下午１６时３０分]

每日[tim_MET      [tim_ER99   上午１１时]至[tim_ER99

深夜３时]]

[tim_MET 晨]练、[tim_MET 晚]宴

For the expression '今早this morning', ER-99 treats it as a relative time entity and is not to be tagged, while in MET-2 the relative time is to be tagged.

[dur_ER99     [dat_MET     [dat_ER99    11月２４]    至
[dat_ER99２７日]]]

[dat_MET [dat_ER99 11月２４] 至 [dat_ER99２７日]]

[tim_MET 昨夜]

迄[tim_MET今]

[tim_MET今]后

For the expression "数年 quite a few years", ER-99 treat it as a fixed time duration and to be tagged, while "多年 many years" is non-fixed duration and not be tagged.
The expression "一年 one year" is to be tagged as Duration

新的 [一年] 即将开始

入伍 [dur 一年]多 的时间里

硬是在地下室干了 [dur 一年] 的公司

一年创产值效益……

一年便多收入……

聘金为一年 [mon 900万美元] 的价码

The expression "每年 each year" / "年 annual, yearly" 不标注 年产值…… 每年创产值效益…… 每年收入……

How to tag NUMEX

1. Percentage

[per 百分之三十九] "thirty nine percent"

大约 [per 5%] "about five percent"

[per 九成] "ninety percent"

2. Money

[mon 四万五千块钱] "forty five thousand Yuan money"

[mon 四万五千人民币] "forty five thousand RMB"

[mon 人民币四万五千元] "RMB forty five thousand Yuan"

• In the case that the same account money is spelled with different currencies, they are to be tagged separately.

The location name embedded in Money is not to be tagged.

    [mon 43.6亿美元] "43.6 billion USD"

- The string "约 about" does not have an absolute concept, so it is not to be tagged.

    约 [mon 十万元] "about one hundred thousand Yuan"

    多于 [mon $90,000] "more than $90000"

- The string "s几everal" can be changed by a certain number and to express an absolute account, so it is to be tagged.

    [mon 几十万元] "several hundred thousand Yuan"

- The string "余 over" is not to be tagged generally; in the following case it is tagged because the entire expression is non-decomposable.

    [mon 二十七万余元] "twenty-seven hundred thousand over Yuan"

- In this guideline, for a location name embedded in a currency, if is is spelled with abbreviation then it is not tagged, otherwise it is to be tagged as '-ms'.

```
[mon 2000新元]  "2000 SID"
[mon  2000  [L_ms  新加坡]  元]  '2000  Sigapore
Dollas Yuan'.
```

3. Frequency/ Integer/Fraction/ Decima/ Ordinal

```
[fre 26次]
[fre 十多次]
[fre 多次]
[fra 3/4]
[fra 四分之三]
[fra 百万分之八]
[fra 百万分之三百六十四]
[fra 半]
```

[fra 4倍半]

[dec 3.14]

[dec 三点一四]

[ord 第二] 故乡

[ord 1174号]文件

[ord 6路]汽车

[ord 第一]天

[ord 第二]年

[int   20  名]杰出教师

[int 亿万]  人民

[int  几千万盆]

If the integer/fraction/decimal has a number unit as a modifier, then the number unit is to be tagged.
[int几家] 工厂 "several 'jia' factories" —家 [int 5口] 人 "one family with five 'kou' persons" [int 58倍] "58 times".

4. Special case

- The tab numbers are not be tagged.

一靠政策调动农民的积极性；

二靠科技；

三靠投入

１．自卑的羞耻感。

２．依赖的恐惧感。

３．温饱即安的安全感。

(1)加强爱国主义的宣传教育。

(2)加强正确的理想、信念、人生观、价值观的宣传教育。

(3)加强马克思主义的唯物辩证法的宣传教育。

- Numbers in some idioms, such as "会儿one moment" "—起together", "— 流  first level" "唯—only one" etc, are not to be tagged.
- Numbers embedded in Person name, Location name or Organization name are not to be tagged.

[O 一中]　　"No. 1 middle school"

[L三明市]　　"San Ming city"

任队长的 [O　1205钻井队]

- If the string "一" functions as article 'a', then it is not be tagged. "一倍 one time over "is to be tagged. As a part of the ordinal number, "一" is to be tagged.

一座城市　　　　" a city"

最大的企业之一　"one of the biggest companies"

[ord 一等]奖　" the first prize"

我的收入是它的[int　一倍] "my income is one time over his".

How to tag MEASUREX

MEASUREX includes: Age, Weight, Length, Temperature, Angle, Area, Capacity, Speed and Rate.

[age　34岁]

[age 六十寿辰]

[age 花甲]老人

产量达到　[wei 数千万吨]

开掘到　[len 一米六七] 深度时

高 [len 五米] 宽　[len 一百米]

积温高（ [tem 2800度] ）

钝角就是大于　[ang 90度]　的角

农田 [are 20万亩]

运输量为 [cap 34个立方]

一[cap两箩]谷子

最高速度 [spe 360米每秒]

[wei 二十万吨] 级以上

[tem 零下5] 到　[tem　6摄氏度]

Notes that: for the other units of weights and measures in Physics and Chemistry, they are to be tagged as "mea"

```
[mea 5.5瓦特]      "5.5 watt"

[mea 1.5 牛顿]      "1.5 Newton"
```

How to tag ADDRESSX

ADDRESX includes: Email, Phone, Fax, Telex, WWW.
[ema exp@email.com.cn]
Tel: [pho 86-10-66665555]
电话: [pho 86-10-66665555]
FAX: [fax 86-10-66665555]
TELEX: [tel 86-10-66665555]
[www http:---- www.hotmail.com]

For numbers of tel or fax, it is to be tagged only there is a designator such as "tel,电话".

Although the present invention has been described with reference to particular embodiments, workers skilled in the art will recognize that changes may be made in form and detail without departing from the spirit and scope of the invention.

**Claims**

1. A corpus stored in a computer-readable medium for training a language model, the corpus comprising:

   a plurality of characters; and
   a plurality of morphological tags associated with a plurality of sequences of characters of the plurality of characters, the plurality of morphological tags indicating a morphological type of an associated sequence of characters and a combination of parts forming a morphological subtype.

2. The corpus of claim 1 wherein the morphological type is one of affixation, reduplication, split, merge and head particle.

3. The corpus of claim 1 wherein the morphological type is an affixation and the combination of parts includes a word and at least one of a prefix and a suffix.

4. The corpus of any of claims 1-3 wherein the combination of parts indicates a part of speech for the word.

5. The corpus of claim 1 wherein the morphological type is a reduplication and the combination of parts includes a pattern of characters.

6. The corpus of claim 1 wherein the morphological type is a merge and the combination of parts includes a pattern of characters.

7. The corpus of any of claims 1-6 and further comprising a plurality of factoid tags providing indications of whether a sequence of characters is a factoid.

8. The corpus of any of claims 1-7 and further comprising a plurality of named entity tags providing indications of whether a sequence of characters is a named entity.

9. The corpus of any of claims 1-8 and further comprising an indication of whether a sequence of characters is contained in a lexicon.

10. A computer readable medium having instructions for performing word segmentation, the instructions comprising:

    receiving an input of unsegmented text;
    accessing a language model to determine a segmentation of the text;
    detecting a morphologically derived word in the text; and
    providing an output of segmented text and an indication of a combination of parts that form the morphologically derived word.

11. The computer readable medium of claim 10 wherein the instructions further comprise indicating that the morphologically derived word is one of an affixation, reduplication, split, merge and head particle.

12. The computer readable medium of any of claims 10-11 wherein the instructions further comprise detecting a lexicon in the text.

13. The computer readable medium of any of claims 10-12 wherein the instructions further comprise detecting a factoid in the text.

14. The computer readable medium of any of claims 10-13 wherein the instructions further comprise detecting a named entity in the text.

15. The computer readable medium of any of claims 10-14 wherein providing an output further comprises indicating a part of speech for the combination of parts.

16. The computer readable medium of any of claims 10-15 wherein providing an output further comprises indicating a pattern of characters forming the combination of parts.

17. A method of developing a corpus for training a language model, comprising:

extracting a list of potential words from a corpus that match defined words and rules;
determining if the list includes a sufficient number of defined words and rules;
annotating the corpus to provide indications of word type; and
providing morphological tags in the corpus indicating a morphological type of an associated sequence of characters and a combination of parts forming a morphological subtype.

18. The method of claim 17 wherein annotating further comprises providing indications of whether the word is a lexicon, a morphologically derived word, a factoid and a named entity.

19. The method of any of claims 17-18 wherein the morphological type is one of affixation, reduplication split, merge and head particle.

20. The method of any of claims 17-19 wherein providing morphological tags further comprises indicating a part of speech for the combination of parts.

21. The method of any of claims 17-20 wherein providing morphological tags further comprises indicating a pattern of characters for the combination of parts.

22. The method of any of claims 17-21 and further comprising, after providing morphological tags in the corpus, using said corpus to annotate a larger amount of text.

23. A computer system adapted to perform the method of any of claims 17-22.

FIG. 1

EP 1 515 240 A2

INPUT 202

LANGUAGE PROCESSING SYSTEM 200

LANGUAGE
MODEL — 206

OUTPUT 204

# FIG. 2

250

```
┌─────────────────────────────┐
│     DEFINE WORDS AND RULES   │──── 252
└─────────────────────────────┘
              │
              ▼
┌─────────────────────────────┐
│   PROVIDE AN EXTENSIVE CORPUS│──── 254
└─────────────────────────────┘
              │
              ▼
┌─────────────────────────────┐
│   EXTRACT A LIST THAT MATCHES│
│  THE WORDS AND RULES DEFINED │──── 256
│  TO CREATE A LIST OF POTENTIAL│
│            WORDS             │
└─────────────────────────────┘
              │
              ▼
┌─────────────────────────────┐
│   CHECK LIST TO FILTER NOISE │──── 258
└─────────────────────────────┘
              │
              ▼
         ╱─────────╲
        ╱ DOES LIST ╲
       ╱ HAVE SUFFICIENT╲──── 260
       ╲   COVERAGE?    ╱
        ╲─────────────╱
              │
              ▼
┌─────────────────────────────┐
│         TAG CORPUS           │──── 262
└─────────────────────────────┘
              │
              ▼
┌─────────────────────────────┐
│   CHECK TAGGED CORPUS TO     │──── 264
│      CORRECT ERRORS          │
└─────────────────────────────┘
              │
              ▼
┌─────────────────────────────┐
│   USE RESULTING CORPUS AS A  │
│  SEED CORPUS TO TAG LARGER   │──── 266
│ AMOUNT OF TEXT AS TRAINING OR│
│      TESTING CORPUS          │
└─────────────────────────────┘
```

FIG. 3

280

DEVELOP ANNOTATED CORPUS — 282

↓

CREATE TRAINING OR TESTING MODEL BASED ON ANNOTATED CORPUS — 284

↓

EVALUATE MODEL COMPARED TO PREDEFINED TEST CORPUS OR OTHER MODELS — 286

# FIG. 4

FIG. 5

Morphemes

**Affixation** | **Reduplication** | **Split** | **Merge** | **Head + Particle**

**Prefix + Stem**

MP_Pfx+Noun-Noun
MP_Pfx+Num-Noun
MP_Pfx+Verb-Verb
MP_Pfx+Noun-Verb
MP_Pfx+Noun-Adj
MP_Pfx+Verb-Adj
MP_Pfx+Adj-Adj

Total : 7

**Stem + Suffix**

MS_Adj+Sfx-Noun
MS_Noun+Sfx-Noun
MS_Verb+Sfx-Noun
MS_Pron+Sfx-Noun
MS_Verb+Noun+Sfx-Noun
MS_Verb+Verb-Verb
MS_Noun+Sfx-Verb
MS_Adj+Sfx-Verb
MS_Verb+Sfx-Verb
MS_Noun+Sfx-Adj
MS_Adj+Sfx-Adj
MS_Verb+Sfx-Adj
MS_Adv+Sfx-Adj

Total: 13

**Reduplication**

MR_AA-Noun
MR_AABB-Noun
MR_ABAC-Noun
MR_ABCD-Noun
MR_ACBC-Noun
MR_V1V-Verb
MR_V1e1V-Verb
MR_V1eV-Verb
MR_AA-Verb
MR_AAB-Verb
MR_AABB-Verb
MR_ABAC-Verb
MR_ACBC-Verb
MR_ABCD-Verb
MR_ABCB-Verb
MR_1Vliaozhi-Verb
MR_ABAB-Verb
MR_VVO-Verb
MR_AABB-Adj
MR_ABAC-Adj
MR_AA-Adj
MR_AAB-Adj
MR_ABB-Adj
MR_ABCD-Adj
MR_ACBC-Adj
MR_ABAB-Adj
MR_AA-Measure
MR_AA-Adv
MR_ABAC-Adv
MR_AABB-Adv

Total: 30

**Split**

ML_V+X+O-Verb
ML_qi+O+lai-Verb

Total: 2

**Merge**

MM_AC+BC-Verb
MM_AC+BC-Noun
MM_AB+AC-Noun

Total: 3

**Head + Particle**

MHP_Adj+Dir-Adj
MHP_V+Dir-Verb

Total : 2

EP 1 515 240 A2